# FASCICULE DE BREVET EUROPEEN

(11) **EP 0 545 812 B1**
(45) Date de publication et mention de la délivrance du brevet: **19.02.1997**
(21) Numéro de dépôt: 92403251.9
(22) Date de dépôt: 02.12.1992
(51) Int. Cl.: B29C 55/02, C08J 5/18, H01G 4/20, B29K 23/00

(54) **Film plastique bicouche bi-étiré**
Biaxial-gestreckte zweischichtige Kunststoffolie
Biaxially stretched two-layer plastic film

(30) Priorité: 03.12.1991 FR 9114953
(43) Date de publication de la demande: 09.06.1993
(73) Titulaire: BOLLORE TECHNOLOGIES, F-29000 Quimper (FR)
(72) Inventeur: Gueguen, Michel, F-29170 Fouesnant (FR); Billion, Marc, F-56520 Guidel (FR)
(74) Mandataire: Schrimpf, Robert

(56) Documents cités:
- EP-A- 0 008 623
- EP-A- 0 011 796
- EP-A- 0 396 745
- US-A- 3 761 772

## Description

La présente invention concerne le domaine des films plastiques bi-étirés.

L'invention concerne notamment, mais non exclusivement, un film diélectrique pour condensateurs.

L'invention concerne également un film plastique pour le pelliculage d'objets.

Dans le domaine des films diélectriques pour condensateurs, il a été proposé de réaliser des condensateurs constitués par un enroulement ou un empilement de feuillets en film de polypropylène métallisé sur l'une des faces. Il est bien connu de l'homme de l'art que cette configuration confère au condensateur d'intéressantes propriétés d'autocitatrisation. Le métal déposé est typiquement du zinc ou de l'aluminium.

Par ailleurs, il a été proposé d'imprégner le film avec une huile isolante pour permettre au condensateur de fonctionner à des tensions élevées. Cette huile peut être minérale ou organique. Selon la nature de l'huile, celle-ci dissout plus ou moins partiellement le polypropylène et altère les propriétés d'adhérence du métal à la surface du film. Il a été constaté par la Demanderesse une tenue de métallisation insatisfaisante pour certains couples nature du métal déposé / nature de l'huile.

L'imprégnation des films est opérée typiquement après bobinage ou assemblage.

Pour que l'imprégnant puisse progresser, on veille en général à maintenir un espace suffisant entre les spires ou les feuillets empilés en utilisant des films rugueux.

Il a été proposé ainsi des films en polypropylène à couche unique présentant une rugosité dite à "ellipses".

Cette rugosité s'obtient en ajoutant au polypropylène des agents nucléants qui génèrent dans la masse du film des zones de cristallisation différentes, encore appelées phase β. Par fusion de la phase β du polypropylène lors de l'étirage long, on obtient un film dont la surface est constellée de cratères microscopiques au contour sensiblement elliptique.

Une telle rugosité ne donne cependant pas entièrement satisfaction, notamment parce qu'elle est difficile à maîtriser.

Or, la Demanderesse a constaté que si une légère rugosité permet d'améliorer l'adhérence des revêtements métalliques, des irrégularités de surface trop prononcées entraînent un décollement de la métallisation au sommet des crêtes de rugosité. Il est donc souhaitable de disposer d'un film diélectrique dont on maîtrise parfaitement la rugosité.

On connaît par la publication EP-A-0 011 796 un film diélectrique pour condensateurs, bi-étiré et comprenant deux couches de compositions différentes.

On connaît par la publication EP-A-0 396 745 un procédé pour la fabrication d'une composition copolymère d'éthylène et de propylène et l'application de cette composition à la réalisation d'un film diélectrique pour condensateurs.

On connaît par la publication US-A-3 761 772 un film diélectrique pour condensateurs comprenant deux couches de composition différentes dont l'une est constituée par un copolymère de propylène et d'éthylène. La rugosité est obtenue par embossage de la couche constituée par le copolymère.

Les films décrits dans ces publications ne donnent pas entièrement satisfaction, soit parce que, lorsque métallisés, ils présentent une mauvaise tenue de la métallisation, soit parce que la rugosité de tels films est difficile à maîtriser, soit encore parce que l'obtention de la rugosité nécessite une étape d'embossage supplémentaire.

Dans le domaine des films pour le pelliculage, on recherche généralement un aspect de surface satiné, qui donne à l'objet ainsi recouvert un aspect au toucher ou à l'oeil particulièrement attractif pour le consommateur.

Le but principal de l'invention est de proposer un film plastique bi-étiré présentant des caractéristiques d'adhérence de la métallisation et/ou d'aspect de surface améliorées, et de remédier notamment aux inconvénients précités.

L'invention atteint ce but en proposant un film plastique bi-étiré constitué d'au moins deux couches de compositions différentes, adjacentes, dont une première couche essentiellement constituée par au moins un polymère d'au moins une oléfine, la face externe de la deuxième couche étant rugueuse, caractérisé en ce que la deuxième couche comprend du polyéthylène haute densité et au moins un copolymère statistique d'oléfines, de point de fusion inférieur à la température de fusion de la première couche.

Le contrôle de la rugosité d'un film selon l'invention se fait avantageusement en réglant les rapports de quantité respective de copolymère statistique et de polyéthylène haute densité lors de l'extrusion.

Selon une caractéristique avantageuse de l'invention, la première couche comprend un polymère ou copolymère ou terpolymère ou mélange de ceux-ci obtenus par la polymérisation d'au moins l'une des oléfines suivantes : éthylène, propylène, butène, pentène, méthylpentène, hexène.

On préfèrera une première couche comprenant du polypropylène.

Avantageusement, et particulièrement pour les applications concernant les films diélectriques, le polypropylène est d'isotacticité supérieure ou égale à 95 %.

Selon une caractéristique avantageuse de l'invention, la deuxième couche comprend un copolymère statistique d'éthylène et de propylène.

On préfère alors un copolymère statistique d'éthylène et de propylène comprenant entre 0,1 et 5 % en poids d'éthylène.

Avantageusement, la deuxième couche comprend aussi du polypropylène.

Selon une caractéristique avantageuse de l'invention, la deuxième couche comprend entre 50 et 95 % en poids d'un copolymère statistique d'oléfines de point de fusion inférieur à la température de fusion de la première couche.

Selon une caractéristique avantageuse de l'invention, le film comprend de plus au moins une troisième couche de composition identique à la deuxième couche.

Avantageusement, le film est tricouche, la première couche étant comprise en sandwich entre la deuxième couche et la troisième couche.

On préfère que la couche centrale représente plus de 70 % du poids total du film.

Avantageusement, la rugosité est de R_{z} supérieur ou égal 1 µm.

Dans le cas d'un film tricouche, on préfèrera que la troisième couche soit de rugosité comparable à celle de la deuxième couche sur sa face externe.

Avantageusement, le film est métallisé sur la face externe de la deuxième couche.

Selon une caractéristique avantageuse de l'invention, le film est utilisé comme film diélectrique dans les condensateurs.

Selon une autre caractéristique avantageuse de l'invention, le film est utilisé pour le pelliculage d'objets.

Pour le pelliculage, on préfèrera que la rugosité soit de R_{z} compris entre 3,5 et 5 µm.

D'autres caractéristiques et avantages de l'invention apparaîtront à la lecture de la description détaillée qui suit, qui débute par une étude des aspects généraux de l'invention et se termine par des exemples de variantes d'exécution préférées de l'invention dans le cas de l'application du film à la réalisation de condensateurs et de l'application du film au pelliculage, et au vu du dessin annexé sur lequel :
- la figure 1 est une vue en coupe schématique, prise suivant l'épaisseur d'un film selon l'invention,
- la figure 2 est une vue en coupe schématique, prise suivant l'épaisseur d'un film selon une variante de réalisation de l'invention concernant un film diélectrique métallisé,
- la figure 3 est un tableau résumant les résultats d'une étude comparative de tenue de la métallisation entre un film selon l'art antérieur et un film selon l'invention,
- la figure 4 est une vue en coupe schématique, prise suivant l'épaisseur, d'un film selon l'invention dans une variante de réalisation concernant la réalisation de films diélectrique pour condensateurs,
- les figures 5 et 6 comparent schématiquement l'épaisseur minimale entre deux couches métallisées dans un condensateur réalisé avec un film selon l'art antérieur, et un film selon l'invention.

Dans toute la description, les rugosités sont appréciées conformément à la norme DIN 4768. En particulier, selon cette norme, R_{z} désigne la profondeur moyenne de rugosité, et Rₐ la rugosité arithmétique moyenne.

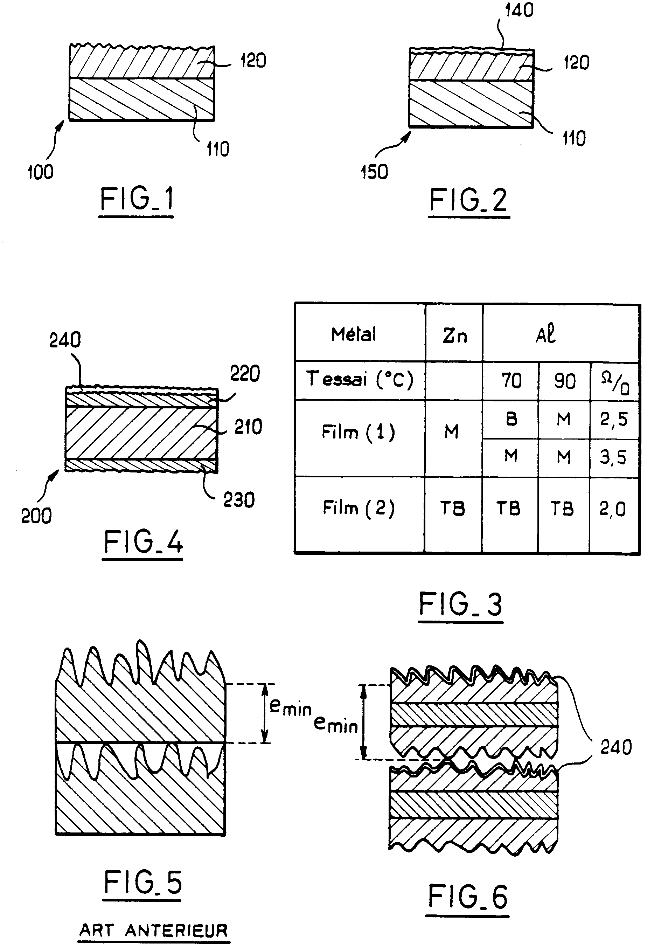

Un film plastique bi-étiré conforme à l'invention comporte au moins deux couches de compositions différentes représentées schématiquement en coupe selon l'épaisseur sur la figure 1.

On désigne le film plastique bi-étiré dans son ensemble par la référence 100.

Le film 100 comporte au moins deux couches de compositions différentes, une première couche référencée 110 adjacente à une deuxième couche référencée 120.

La structure au moins bi-couche du film 100 permet d'avoir un film présentant à la fois des propriétés mécaniques ou diélectriques ou optiques avantageuses, obtenues par un choix particulier de la composition de la première couche, et des propriétés de surfaces avantageuses dues à un choix avantageux de la composition de la deuxième couche.

La première couche 110 est essentiellement constituée par un polymère d'oléfine. L'expression "polymère d'oléfine" doit s'interpréter dans cette demande de brevet de façon très générale et désigne généralement un mélange de polymères et/ou de copolymères d'oléfines et/ou de terpolymères d'oléfines.

Le polymère d'oléfine constituant la première couche est avantageusement choisi parmi les polymères d'oléfines typiquement utilisés pour la réalisation de films diélectriques pour condensateurs ou pour le pelliculage d'objets.

Parmi ceux-ci, citons le polypropylène, le polybutène, le polyméthylpentène, le polyéthylène, le polypropylène, qui sont des polymères particulièrement avantageux. Notamment, le polypropylène est un matériau résistant, de température de fusion élevée (170°C), de faible densité et qui présente d'excellentes caractéristiques diélectriques, ce qui en fait un matériau préféré pour réaliser des condensateurs de faible encombrement.

Sont également avantageux des copolymères ou des terpolymères obtenus par la polymérisation d'une ou de plusieurs oléfines suivantes : éthylène, propylène, butène, pentène, méthylpentène, hexène.

Il a été constaté par la Demanderesse que d'une façon générale, la tenue de la métallisation est améliorée lorsque la deuxième couche comprend au moins un copolymère statistique d'oléfines, de point de fusion inférieur à la température de fusion de la première couche.

Avantageusement, la première couche est constituée essentiellement par du polypropylène et la deuxième couche comprend un copolymère statistique d'éthylène et de propylène. On préfèrera dans ce cas un copolymère statistique comprenant entre 0,1 et 5 % en poids d'éthylène.

Cette faible quantité d'éthylène permet d'abaisser le point de fusion du copolymère pour le situer en deçà de la température de fusion du polypropylène, voisine de 170°C. Par exemple, avec 3 % en poids d'éthylène, le point de fusion du copolymère avoisine les 160°C.

Le copolymère statistique contenant une faible proportion d'éthylène conserve avantageusement des propriétés mécaniques ou diélectriques ou optiques proches de celles du polypropylène et il en résulte une compatibilité entre les deux couches du film particulièrement avantageuse.

L'emploi d'un copolymère statistique est particulièrement avantageux par rapport à l'emploi d'un copolymère séquencé, car, d'une façon générale, les copolymères statistiques conduisent à des propriétés intermédiaires entre celles des deux homopolymères, tandis que les copolymères séquencés conduisent à des matériaux présentant à la fois les propriétés des deux homopolymères.

Ainsi, le copolymère statistique d'éthylène et de propylène correspond à un meilleur compromis, pour une application donnée, entre qualités et défauts respectifs de chacun des polymères.

Notamment, une quantité de polyéthylène trop importante nuit aux qualités diélectriques du film.

Les propriétés avantageuses d'adhérence de la métallisation des films selon l'invention constatées par la Demanderesse peuvent s'expliquer, d'une façon très générale, par le ramollissement du copolymère statistique, de point de fusion inférieur à la température de fusion de la première couche, lors du chauffage du film en vue de sa métallisation.

Il est particulièrement avantageux que la deuxième couche comporte en plus du copolymère statistique un autre polymère d'oléfine, c'est-à-dire un polymère ou un mélange de polymères et/ou de copolymères, et/ou de terpolymères obtenus à partir de la polymérisation d'au moins l'une des oléfines suivantes : éthylène, propylène, butène, pentène, méthylpentène, hexène.

On préfèrera le polyéthylène haute densité, de température de fusion voisine de 130°C. Avantageusement, la deuxième couche comprend de plus du polypropylène, présentant un écart de viscosité avec le polyéthylène haute densité.

Avantageusement, le polyéthylène haute densité et le polypropylène ont des indices d'écoulement à l'état fondu (Melt Flow Index (MFI) en anglais), tels qu'évalués selon la norme ASTM D1238, qui diffèrent d'au moins trois unités.

De préférence, le polyéthylène est de MFI inférieur à 2 et le polypropylène est de MFI supérieur à 5.

De préférence également, le polyéthylène est de MFI supérieur à 5 et le polypropylène est de MFI inférieur à 2.

Cet autre polymère d'oléfine permet lors de l'étirage, de jouer sur les différences de tension à la fusion des constituants de la deuxième couche pour générer une rugosité sur la surface externe de la deuxième couche.

On préfèrera que la deuxième couche comprenne entre 50 et 95 % en poids de copolymère statistique de point de fusion inférieur à la température de fusion de la première couche.

Avantageusement, et préférentiellement, dans le cas où la première couche est constituée de polypropylène, la deuxième couche comprend entre 50 et 95 % en poids de copolymère statistique d'éthylène et de propylène.

Un film selon l'invention est avantageusement obtenu par coextrusion puis étirage.

Dans ce cas, le contrôle de la rugosité se fait avantageusement en réglant simplement les rapports de quantités respectives de copolymère statistique et de polymère d'oléfine lors de l'extrusion.

Plus précisément, dans le cas où le copolymère statistique est un copolymère statistique de propylène et d'éthylène et le polymère d'oléfine est du polyéthylène haute densité, la rugosité augmente principalement avec la fraction de polyéthylène haute densité constituant la deuxième couche.

Décrivons maintenant plus précisément la variante de réalisation de l'invention concernant les films diélectriques pour condensateurs.

Rappelons que l'on recherche pour de tels films, d'une façon générale :
- une grande rigidité diélectrique,
- une bonne tenue de la métallisation,
- une bonne imprégnabilité par les huiles diélectriques,
- une rugosité maîtrisée.

Avantageusement, la première couche est constituée par du polypropylène, dont les propriétés physiques principales ont été rappelées précédemment.

En alternative, la première couche peut être avantageusement constituée par du polyméthylpentène, de point de fusion supérieur à 200°C et qui présente également de bonnes propriétés diélectriques.

Afin d'illustrer les caractéristiques avantageuses d'adhérence de la métallisation conférées par un film selon l'invention, il a été mis au point par la Demanderesse une méthode permettant de contrôler l'adhérence d'une couche métallisée 140 d'un film 150 métallisé sur une face rugueuse, telle que représentée en coupe schématique sur la figure 2. Cette méthode consiste essentiellement à appliquer les échantillons de film sur du polyuréthane liquide, la face métallisée en contact avec le polyuréthane. On provoque ensuite la polymérisation du polyuréthane.

A l'issue de la polymérisation, le film de polyuréthane adhère fortement à la couche métallique.

On immerge ensuite pendant 20 heures l'échantillon de film collé sur le polyuréthane dans une huile typiquement utilisée pour l'imprégnation, par exemple de l'huile de colza, à température contrôlée et préalablement dégazée sous vide.

L'appréciation de l'adhérence se fait au terme de cette immersion, qualitativement, par pelage de la couche de polyuréthane collée sur le film. On note trois niveaux d'adhérence, selon que le métal ne se décolle pas du film, qu'il se décolle mais avec une résistance importante ou qu'il se décolle sans résistance ou presque.

Ces trois niveaux correspondent respectivement aux références TB, B, M dans le tableau de la figure 3.

Il a également été porté dans ce tableau les caractéristiques de résistivité des différents films, en ohm par carré.

Les métallisations ont été réalisées avec deux métaux différents, aluminium et zinc.

Les films comparés sont d'une part un film polypropylène classique présentant une rugosité à ellipses (1), d'autre part un film bi-couche selon l'invention (2), de rugosité R_{z} comparable, comprenant une première couche en polypropylène et une deuxième couche comprenant un mélange de 50 % de copolymère statistique d'éthylène et de propylène avec 50 % de polyéthylène haute densité.

Il ressort de ce type d'essais menés par la Demanderesse que les propriétés de tenue de métallisation d'un film selon l'invention sont améliorées.

Avantageusement, le film comporte de plus une troisième couche de composition identique à la deuxième.

La figure 4 illustre schématiquement un film tricouche 200 métallisé sur l'une des faces. La première couche 210 du film 200 est avantageusement comprise en sandwich entre la deuxième couche 220 et la troisième couche 230.

Un tel film est avantageusement obtenu avec deux extrudeuses, une première extrudeuse extrudant la première couche 210 et une deuxième extrudeuse extrudant simultanément les deuxième et troisième couches.

Une telle structure tricouche est avantageusement rugueuse sur ses deux faces, avec des pics de rugosité ayant une profondeur de rugosité R_{z} comparable et avantageusement moitié moindre que la profondeur de rugosité d'un film rugueux sur une seule face ayant des performances à l'imprégnation équivalentes.

En effet, lorsque le film est bobiné ou empilé, l'espace total libre entre les spires ou les feuillets est identique dans le cas d'un film rugueux sur une seule face ou dans le cas d'un film rugueux sur les deux faces, mais ayant une profondeur de rugosité moitié moindre.

Toutefois, le deuxième cas est particulièrement avantageux car l'épaisseur minimale eₘᵢₙ entre deux couches métallisées 240 est augmentée, ainsi qu'illustré sur les figures 5 et 6.

Le film selon l'invention permet donc d'avoir une plus grande épaisseur de diélectrique entre deux électrodes, donc permet avantageusement de réaliser des condensateurs fonctionnant à des tensions plus élevées.

Avantageusement, la rugosité R_{z} est supérieure à 1 µm.

Les caractéristiques et avantages de l'invention ne se limitent pas à la réalisation de films pour condensateurs, mais concernent également la réalisation de films pour le pelliculage.

On préfèrera alors les caractéristiques de rugosité donnant un aspect satiné particulièrement attrayant pour l'utilisateur de l'objet pelliculé.

Il résulte d'essais menés par la Demanderesse qu'un film selon l'invention ayant un Rₐ compris entre 0,6 et 0,8 µm, un R_{z} entre 3 et 5 µm avec un nombre de pics P_{c} compris entre 170 et 250 par cm possède un aspect de surface particulièrement attractif.

P_{c} correspond au nombre de pics au-dessus et au-dessous de lignes de coupe symétriques par rapport à la ligne moyenne et distantes de celle-ci de 0,25 µm.

Il résulte de la présente description qu'un film au moins bi-couche selon l'invention présente des caractéristiques mécaniques, diélectriques, optiques améliorées par rapport aux films de l'art antérieur connus par la Demanderesse, et un tel film sera avantageusement appliqué à la réalisation de condensateurs et au pelliculage d'objets.

## Revendications

1. Film plastique (100 ; 150 ; 200) bi-étiré constitué d'au moins deux couches (110, 120 ; 210, 220) de compositions différentes, adjacentes, dont une première couche (110 ; 210) essentiellement constituée par au moins un polymère d'au moins une oléfine, la face externe de la deuxième couche étant rugueuse, caractérisé en ce que la deuxième couche (120 ; 220) comprend du polyéthylène haute densité et au moins un copolymère statistique d'oléfines, de point de fusion inférieur ou égal à la température de fusion de la première couche.

2. Film plastique selon la revendication 1, caractérisé en ce que la première couche (110 ; 210) comprend un polymère ou copolymère ou terpolymère ou mélange de ceux-ci obtenus par la polymérisation d'au moins l'une des oléfines suivantes : éthylène, propylène, butène, pentène, méthylpentène, hexène.

3. Film plastique selon la revendication 2, caractérisé en ce que la première couche (110 ; 210) comprend du polypropylène.

4. Film plastique selon la revendication 3, caractérisé en ce que la première couche (110 ; 210) comprend du polypropylène d'isotacticité supérieure ou égale à 95 %.

5. Film plastique selon l'une des revendications 1 à 4, caractérisé en ce que la deuxième couche (120 ; 220) comprend un copolymère statistique d'éthylène et de propylène.

6. Film plastique selon la revendication 5, caractérisé en ce que le copolymère statistique d'éthylène et de propylène comprend entre 0,1 et 5 % en poids d'éthylène.

7. Film plastique selon l'une des revendications 1 à 6, caractérisé en ce que la deuxième couche (120 ; 220) comprend en outre du polypropylène.

8. Film plastique selon l'une des revendications 1 à 7, caractérisé en ce que la deuxième couche (120; 220) comprend entre 50 et 95 % en poids d'un copolymère statistique d'oléfines de point de fusion inférieur à la température de fusion de la première couche.

9. Film plastique (200) selon l'une des revendications 1 à 8, caractérisé en ce qu'il comprend de plus au moins une troisième couche (230) de composition identique à la deuxième couche (220).

10. Film plastique (200) selon la revendication 9, caractérisé en ce que le film est tricouche, la première couche (210) étant comprise en sandwich entre la deuxième couche (220) et la troisième couche (230).

11. Film plastique (200) selon la revendication 10, caractérisé en ce que la couche centrale (210) représente plus de 70 % du poids total du film.

12. Film plastique selon la revendication 10 ou 11, caractérisé en ce que la troisième couche (230) est de rugosité voisine de la deuxième (220).

13. Film plastique selon l'une des revendications 1 à 12, caractérisé en ce que la rugosité est de R_{z} supérieur ou égal à 1 µm.

14. Film plastique selon l'une des revendications 1 à 13, caractérisé en ce que la rugosité est de R_{z} compris entre 3,5 et 5 µm.

15. Film plastique (150 ; 200) selon l'une des revendications 1 à 14, caractérisé en ce que le film est métallisé sur la face externe de la deuxième couche (120 ; 220).

16. Film plastique selon l'une des revendications 1 à 15, caractérisé en ce que le film (150 ; 200) est utilisé comme film diélectrique dans les condensateurs.

17. Film plastique (100) selon l'une des revendications 1 à 15, caractérisé en ce que le film est utilisé pour le pelliculage d'objets.

## Claims

1. A biaxially stretched plastics film (100; 150; 200) constituted by at least two adjacent layers (110, 120; 210, 220) of different compositions comprising a first layer (110; 210) essentially constituted by at least one polymer of at least one olefin, the outside face of the second layer being rough, the film being characterized in that the second layer (120; 220) comprises a high density polyethylene and at least one statistical copolymer of olefins, having a melting point lower than or equal to the melting temperature of the first layer.

2. A plastics film according to claim 1, characterized in that the first layer (110; 210) comprises a polymer or a copolymer or a terpolymer or a mixture thereof obtained by polymerizing at least one of the following olefins: ethylene, propylene, butene, pentene, methylpentene, hexene.

3. A plastics film according to claim 2, characterized in that the first layer (110; 210) comprises polypropylene.

4. A plastics film according to claim 3, characterized in that the first layer (110; 210) comprises polypropylene having isotacticity greater than or equal to 95%.

5. A plastics film according to any one of claims 1 to 4, characterized in that the second layer (120; 220) comprises a statistical copolymer of ethylene and of propylene.

6. A plastics film according to claim 5, characterized in that the statistical copolymer of ethylene and of propylene comprises 0.1% to 5% by weight of ethylene.

7. A plastics film according to any one of claims 1 to 6, characterized in that the second layer (120; 220) further comprises polypropylene.

8. A plastics film according to any one of claims 1 to 7, characterized in that the second layer (120; 220) comprises 50% to 95% by weight of a statistical copolymer of olefins having a melting point lower than the melting temperature of the first layer.

9. A plastics film (200) according to any one of claims 1 to 8, characterized in that it further comprises at least a third layer (230) of composition identical to the second layer (220).

10. A plastics film (200) according to claim 9, characterized in that the film is a three-layer film, the first layer (210) being sandwiched between the second layer (220) and the third layer (230).

11. A plastics film (200) according to claim 10, characterized in that the central layer (210) represents more than 70% of the total weight of the film.

12. A plastics film according to claim 10 or 11, characterized in that the third layer (230) is of roughness close to that of the second layer (220).

13. A plastics film according to any one of claims 1 to 12, characterized in that its roughness having R_{z} greater than or equal to 1 µm.

14. A plastics film according to any one of claims 1 to 13, characterized in that its roughness having R_{z} lying in the range 3.5 µm to 5 µm.

15. A plastics film (150; 200) according to any one of claims 1 to 14, characterized in that the film is metallized on the outside face of the second layer (120; 220).

16. A plastics film according to any one of claims 1 to 15, characterized in that the film (150; 200) is used as a dielectric film in capacitors.

17. A plastics film (100) according to any one of claims 1 to 15, characterized in that the film is used for laminating objects.

## Patentansprüche

1. Biaxial gestreckte Kunststoffolie (100, 150, 200), welche aus mindestens zwei benachbarten Schichten (110, 120; 210, 220) mit unterschiedlicher Zusammensetzung aufgebaut ist, von denen eine erste Schicht (110; 210) im wesentlichen aus einem Polymer aus mindestens einem Olefin besteht, wobei die äußere Seite der zweiten Schicht rauh ist, dadurch gekennzeichnet, daß die zweite Schicht (120; 220) Polyethylen mit hoher Dichte und mindestens ein statistisches Olefin-Copolymer mit einem Erweichungspunkt kleiner oder gleich dem Erweichungspunkt der ersten Schicht enthält.

2. Kunststoffolie nach Anspruch 1, dadurch gekennzeichnet, daß die erste Schicht (110; 210) ein Polymer oder Copolymer oder Terpolymer oder eine Mischung hiervon aufweist, welche durch Polymerisieren mindestens eines der folgenden Olefine gewonnen werden: Ethylen, Propylen, Buten, Penten, Methylpenten, Hexen.

3. Kunststoffolie nach Anspruch 2, dadurch gekennzeichnet, daß die erste Schicht (110; 210) Polypropylen enthält.

4. Kunststoffolie nach Anspruch 3, dadurch gekennzeichnet, daß die erste Schicht (110; 210) Polypropylen mit einer Isotaktizität größer oder gleich 95 % aufweist.

5. Kunststoffolie nach einem der Ansprüche 1 bis 4, dadurch gekennzeichet, daß die zweite Schicht (120; 220) ein statistisches Copolymer aus Ethylen und Propylen enthält.

6. Kunststoffolie nach Anspruch 5, dadurch gekennzeichnet, daß das statistische Copolymer aus Ethylen und Propylen zwischen 0,1 Gew.-% und 5 Gew.-% Ethylen enthält.

7. Kunststoffolie nach einem der Ansprüche 1 bis 6, dadurch gekennzeichnet, daß die zweite Schicht (120; 220) außerdem Polypropylen enthält.

8. Kunststoffolie nach einem der Ansprüche 1 bis 7, dadurch gekennzeichnet, daß die zweite Schicht (120; 220) zwischen 50 Gew.-% und 95 Gew.-% eines statistischen Olefin-Copolymers mit einem Erweichungspunkt unterhalb der Erweichungstemperatur der ersten Schicht aufweist.

9. Kunststoffolie (200) nach einem der Ansprüche 1 bis 8, dadurch gekennzeichnet, daß sie weiterhin mindestens eine dritte Schicht (230) mit einer Zusammensetzung aufweist, die identisch mit derjenigen der zweiten Schicht (220) ist.

10. Kunststoffolie (200) nach Anspruch 9, dadurch gekennzeichnet, daß die Folie dreilagig ist, wobei die erste Schicht (210) in Sandwich-Form zwischen der zweiten Schicht (220) und der dritten Schicht (330) gelegen ist.

11. Kunststoffolie (200) nach Anspruch 10, dadurch gekennzeichnet, daß die zentrale Schicht (210) mehr als 70 % des Gesamtgewichts der Folie ausmacht.

12. Kunststoffolie nach Anspruch 10 oder 11, dadurch gekennzeichnet, daß die dritte Schicht (230) eine Rauheit in der Nähe derjenigen der zweiten Schicht (220) aufweist.

13. Kunststoffolie nach einem der Ansprüche 1 bis 12, dadurch gekennzeichnet, daß die Rauheit ein R_{Z} aufweist, das größer oder gleich 1 µm ist.

14. Kunststoffolie nach einem der Ansprüche 1 bis 13, dadurch gekennzeichnet, daß die Rauheit ein R_{Z} aufweist, das zwischen 3,5 µm und 5µm liegt.

15. Kunststoffolie (150; 200) nach einem der Ansprüche 1 bis 14, dadurch gekennzeichnet, daß die Folie auf der äußeren Seite der zweiten Schicht (120; 220) metallisiert ist.

16. Kunststoffolie nach einem der Ansprüche 1 bis 15, dadurch gekennzeichnet, daß die Folie (150; 200) als dielektrischer Film in Kondensatoren verwendet wird.

17. Kunststoffolie (100) nach einem der Ansprüche 1 bis 15, dadurch gekennzeichnet, daß die Folie für die Umhüllung von Gegenständen verwendet wird.
